# EUROPEAN PATENT APPLICATION

(11) **EP 2 386 195 A1**
(43) Date of publication of application: **16.11.2011**
(21) Application number: 11165599.9
(22) Date of filing: 10.05.2011
(51) Int. Cl.: A01B 19/02, A01B 35/14

(54) **Soil-working machine**

(30) Priority: 10.05.2010 IT BO20100294
(71) Applicant: Marinelli, Paolo, 61041 Acqualagna (IT)
(72) Inventor: Marinelli, Paolo, 61041 Acqualagna (IT)
(74) Representative: Jorio, Paolo

(57) **Abstract**

A soil-working machine having a. frame (2) in turn having at least two main members (6, 6a, 6b) connected to each other by a number of cross members (10) and having a number of substantially downward-facing teeth (7); the teeth (7) of one main member (6a) being equally spaced and offset with respect to those of the at least one other main member (6b), so as to define a 10-20 cm, and advantageously 15 cm, centre distance between adjacent furrows (11); and the teeth (7) forming an 80-60°, and advantageously 75°, angle (A) with the terrain.

## Description

The present invention relates to a soil-working machine.

More specifically, the present invention relates to a machine for particularly, though not exclusively, working truffle terrain.

At present, truffle terrain is worked manually using tools to break up and soften the soil, while causing as little damage as possible to existing roots. To prepare soil for truffle cultivation, roughly 10-15 cm deep furrows are made, leaving ridges of undisturbed soil in between, so rainwater runs off into the furrows to create the best truffle cultivation conditions. This is tiring, time-consuming work and therefore prohibitive, over large areas, in terms of labour and cost.

Attempts have been made to cultivate large areas using conventional tractor-drawn harrows, but with poor results.

The known method employs so-called disk or spring harrows.

A disk harrow comprises a frame fitted with disks, which rotate as the harrow is drawn along by the tractor. Besides being expensive and complicated, disk harrows leave no ridges between the furrows, do not leave the roots between the furrows intact, and work the soil too deep, even to the point of breaking up the roots and irreparably damaging the terrain.

Spring harrows have the drawback of being unsuitable for very dry, hard terrain, on account of the springs failing to interact with the terrain, to turn and aerate it and form alternating furrows and ridges.

Moreover, conventional harrows work in substantially straight lines, and cannot work the areas around the base of tree trunks, where truffles originate.

Conventional harrows are also substantially symmetrical and very wide, being designed to work substantially wide-open areas, whereas truffle terrain is covered with randomly arranged vegetation, which makes manoeuvring the tractor, to cover all the areas to be worked, extremely awkward, particularly around tree trunks.

It is an object of the present invention to provide a soil-working machine, particularly, though not exclusively, for working truffle terrain, designed to eliminate the above drawbacks, and which at the same time is cheap and easy to produce.

Another object of the present invention is to provide a machine that adapts easily to the terrain.

Another object of the present invention is to provide a machine that can also work closely around tree trunks, with no need for multiple passes or complicated tractor manoeuvring.

according to the present invention, there is provided a soil-working machine as claimed in the accompanying Claims.

A non-limiting embodiment of the present invention will be described by way of example with reference to the accompanying drawings, in which :
Figure 1 shows a schematic view in perspective of a first embodiment of the machine according to the present invention;

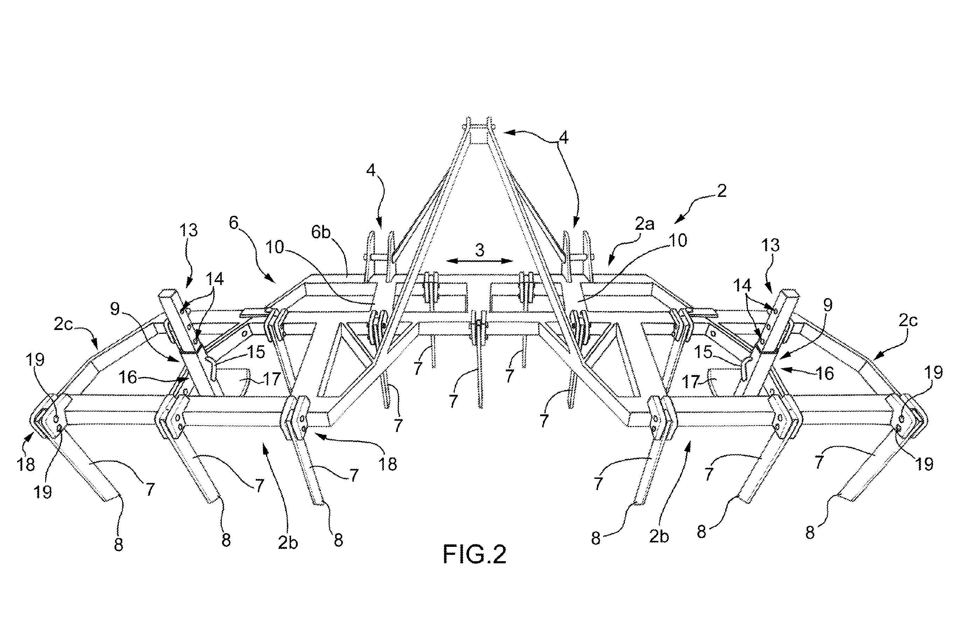

Figure 2 shows a front view of a second embodiment of the machine according to the present invention;

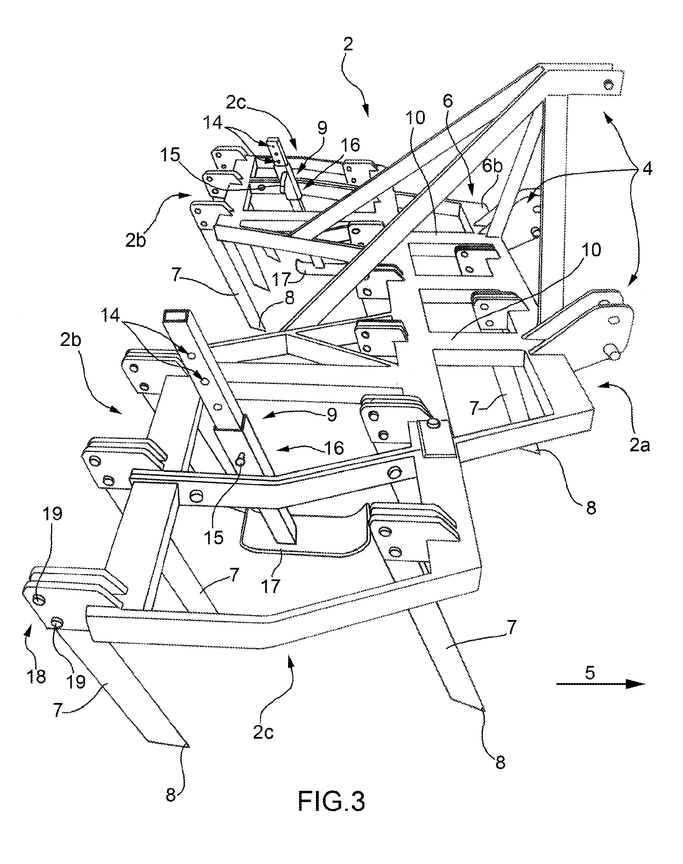

Figure 3 shows a side view in perspective of the Figure 2 machine;
Figure 4 shows a schematic section of terrain worked using the machine according to the present invention;
Figure 5 shows a schematic plan view of a machine in accordance with the present invention;
Figure 6 shows a schematic plan view of the Figure 2 machine;
Figure 7 shows a schematic plan view of a variation of the Figure 5 machine.

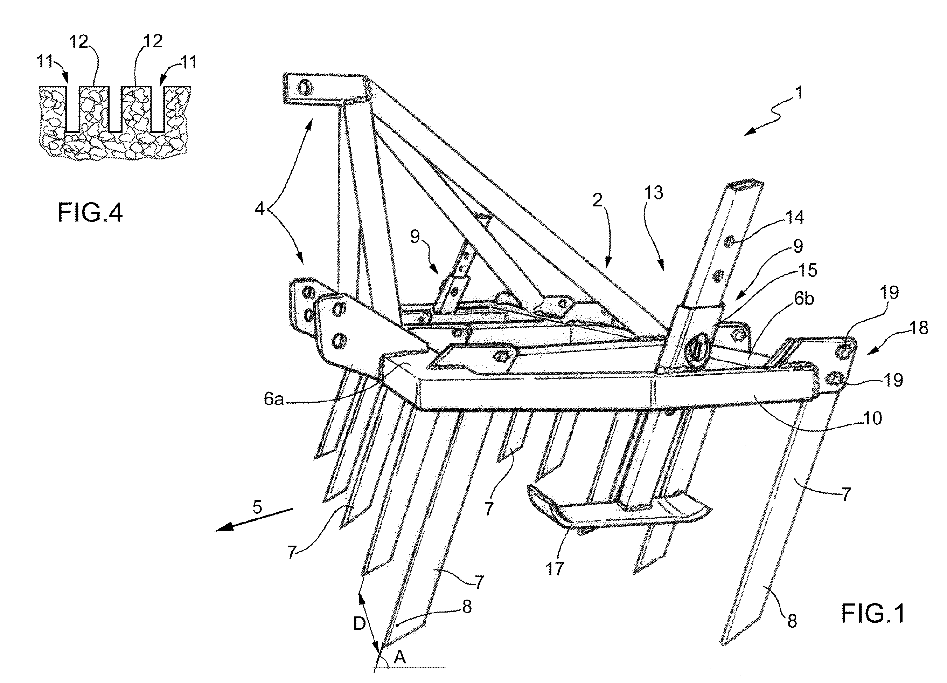

Number 1 in Figure 1 indicates as a whole a soil-working machine, which comprises a frame 2 having a substantially horizontal first direction 3, and is hitched by connecting means 4 to a known tractor not shown.

Machine 1 is hitched to the tractor and drawn over the terrain in a substantially horizontal direction 5 perpendicular to direction 3.

In the example shown, frame 2 comprises two substantially horizontal main members 6 parallel to direction 3 and spaced 60-80 cm, advantageously 80 cm, apart in direction 5.

In the example shown, the frame comprises a front main member 6a and a rear main member 6b connected by a number of cross members 10.

Each of the two main members 6 has a number of teeth 7 d.efined by rigid iron spikes 8, and which are fitted in fixed positions to main member 6 and extend downwards to cooperate with the terrain as machine 1 is drawn along by the tractor.

In the machine according to the invention, teeth 7 are fixed to main members 6 by respective fastening devices 18, each defined, in the example shown, by two replaceable screws 19 with a specific break strength.

That is, depending on the terrain being worked, and to prevent damage to the machine in the event of teeth 7 colliding with a rigid obstacle, such as a large root or a boulder embedded in the terrain, fastening devices 18 break off before any damage can be caused to the machine structure.

To work the terrain properly, teeth 7 on front main member 6a are offset symmetrically with respect to teeth 7 on rear main member 6b.

More specifically, each tooth 7 on front main member 6a is located in an intermediate position with respect to two teeth 7 on rear main member 6b.

In the machine according to the invention, teeth 7 on each main member 6 are spaced apart by a distance D of substantially 20 to 40 cm.

Distance D is advantageously 30 cm to achieve a centre distance of substantially 15 cm between each two adjacent furrows 11 made by machine 1, and leave a strip 12 of terrain between each two furrows 11 substantially intact, as shown in Figure 4.

Teeth 7 advantageously slope in the towing direction to form an angle A of substantially 80-60°, and advantageously of 75°, with the terrain.

To prevent machine 1 from sinking into the ground as it is drawn along by the tractor, frame 2 comprises height-adjustable supporting means 13 for preventing teeth 7 from penetrating too deeply into the ground.

In the example shown, supporting means 13 comprise two skids 9 fitted to the lateral end cross members 10 and having height adjusting means 16.

More specifically, adjusting means 16 comprise a number of holes 14 into which a lock pin 15 is inserted.

The two skids 9 are adjustable in height with respect to frame 2 to define the maximum depth to which teeth 7 can penetrate the terrain.

The bottom end, contacting the terrain, of each supporting means 13 is fitted with a plate 17.

In a variation not shown, wheels are substituted for plates 17 of supporting means 13.

In a variation not shown, machine 1 according to the invention comprises three or more main members 6, each having a number of equally spaced teeth 7 offset with respect to the teeth of the other main members, to achieve a 15 cm centre distance between furrows 11.

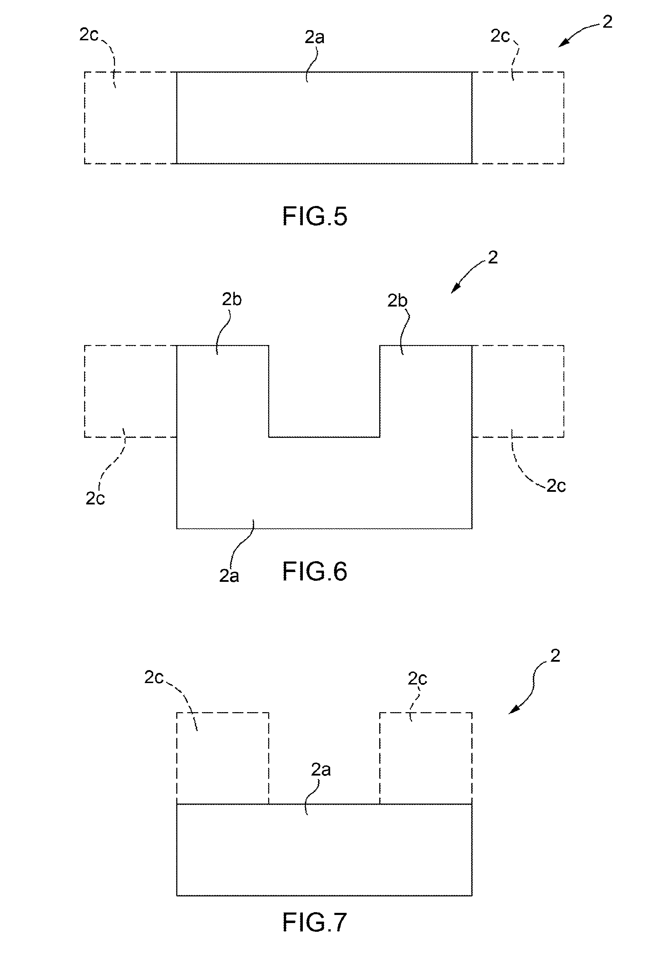

In a first embodiment shown in Figure 5, frame 2 comprises a centre body 2a, to which extensions 2c, also comprising teeth 7, can be fitted removably to widen the work area in direction 3.

Extensions 2c can be fitted, as required, to either or both sides of centre body 2a. This embodiment is particularly suitable for working areas of terrain close to tree trunks, where the tractor, for reasons of bulk and/or interference with overhanging branches, must be kept some distance away.

In the Figure 7 machine, extensions 2c are fitted to centre body 2a in travelling direction 5 to more vigorously work the lateral areas of terrain with a greater number of teeth 7.

In another variation shown in Figure 6, frame 2 is substantially U-shaped, and comprises a centre body 2a extending in direction 3 and usually associated with two lateral bodies 2b extending in direction 5 to form a substantially U shape to work areas close to tree trunks in one pass.

In this embodiment too, one or more lateral extensions 2c can be attached in direction 5, as shown in Figure 6.

The machine according to the invention has the advantage of being adaptable quickly and easily to the terrain by simply attaching one or more extensions, and also of being able to work normally inaccessible areas, especially around tree trunks.

## Claims

1. A soil-working machine comprising a frame (2) in turn comprising a number of main members (6, 6a, 6b) connected to one another by a number of cross members (10) and each having a number of teeth (7); the machine being **characterized by** comprising at least two main members (6a, 6b) parallel to a horizontal direction (3) and perpendicular to the travelling direction (5) of the machine; in that the teeth (7) associated with one main member (6a) are offset with respect to the teeth (7) associated with the at least one other main member (6b); and by comprising at least one extension (2c) fitted removably to a centre body (2a) of the frame (2).

2. A machine as claimed in Claim 1, wherein the at least one extension (2c) is attached to form a longitudinal extension of the centre body (2a) of the frame.

3. A machine as claimed in Claim 1, wherein the at least one extension (2c) is attached transversely to the centre body (2a) of the frame.

4. A machine as claimed in either of the foregoing Claims, wherein the frame (2) is U-shaped, and comprises a centre body (2a) connected integrally to two lateral bodies (2b) extending in the travelling direction (5).

5. A machine as claimed in any one of the foregoing Claims, wherein the teeth (7) are spaced on the main members (6, 6a, 6b) to form equally spaced furrows (11) spaced 10 to 20 cm apart.

6. A machine as claimed in any one of the foregoing Claims, wherein the furrows (11) are spaced 15 cm apart.

7. A machine as claimed in any one of the foregoing Claims, wherein the main members (6, 6a, 6b) are three in number.

8. A machine as claimed in any one of the foregoing Claims, wherein the teeth (7) face downwards, and define an angle (A) ranging between 80° and 60° with the terrain.

9. A machine as claimed in Claim 8, wherein the teeth (7) face downwards, and define a substantially 75° angle (A) with the terrain.

10. A machine as claimed in Claim 9, wherein the teeth (7) are fixed to the main members (6) by replaceable fastening means (18) having a specific break strength.
